# EUROPÄISCHE PATENTSCHRIFT

(11) **EP 3 410 260 B1**
(45) Veröffentlichungstag und Bekanntmachung des Hinweises auf die Patenterteilung: **09.08.2023**
(21) Anmeldenummer: 18171055.9
(22) Anmeldetag: 07.05.2018
(51) Int. Cl.: G06F 3/01, G05B 19/418, G07C 3/14, B25J 13/08, B25J 9/16, B25J 11/00

(54) **VERFAHREN ZUR HAPTISCHEN PRÜFUNG EINES OBJEKTES**
METHOD FOR HAPTIC TESTING OF AN OBJECT
PROCÉDÉ D'ESSAI HAPTIQUE D'UN OBJET

(30) Priorität: 11.05.2017 DE 102017110230
(43) Veröffentlichungstag der Anmeldung: 05.12.2018
(60) Teilanmeldung: 19193037.9
(73) Patentinhaber: Battenberg, Günther, 35037 Marburg (DE)
(72) Erfinder: Battenberg, Günther, 35037 Marburg (DE)
(74) Vertreter: Stoffregen, Hans-Herbert

(56) Entgegenhaltungen:
- DE-A1-102014 105 538
- US-A1- 2003 132 968
- US-A1- 2009 088 884
- US-A1- 2017 091 999

## Beschreibung

Die Erfindung bezieht sich im Oberbegriff auf ein Verfahren zur Erfassung haptischer Merkmale eines zu bewegenden physischen Objektes (14), wie verschwenkbaren Verschlusses, umfassend die Verfahrensschritte
- Virtualisierung des physischen Objektes zur Erzeugung eines virtuellen Objekts,
- Interaktion einer Person mit dem virtuellen Objekt, wobei die Interaktion mittels einer physischen Einrichtung erfolgt,
- Erzeugen einer haptischen Reaktion bei der Interaktion zwischen der Person und dem virtuellen Objekt unter Verwendung der physischen Einrichtung, die entsprechend der durch die Interaktion erfolgenden Bewegung des virtuellen Objektes physisch von der Person bewegt wird, wobei die physische Einrichtung bewegliche Glieder aufweist und mit integrierten Kraft- und/oder Momenten-Sensoren in räumlicher Position des virtuellen Objektes bereitgestellt wird, und wobei auf die physische Einrichtung einwirkenden Kräfte und/oder Momente ermittelt werden.

Die produzierende Industrie befindet sich in einem Umbruch. Die Varianten-Vielfalt von Produkten steigt. Dabei sinken die Serienstückzahlen und Entwicklungsdauern mit dem Ziel, Kundenwünsche flexibel und möglichst individuell zu bedienen. Gleichzeitig steigen die Anforderungen an die Qualität der Bauteile, Baugruppen und Systeme.

Neben der reinen Funktionalität umfassen zu beachtende Qualitätskriterien auch subjektive Eindrücke hinsichtlich Anmutung und Wertigkeit, insbesondere bei hochpreisigen Investitionsgütern. Neben visuellen Merkmalen gewinnen haptische Merkmale eine immer größere Bedeutung.

In immer größerem Umfang gelangen roboterbasierte Messverfahren zur Anwendung. Diese ermöglichen eine reproduzierbare Beurteilung von Produkten hinsichtlich verschiedenster objektiver physikalischer Qualitätskriterien.

Gemäß der DE 10 2005 006 575 A1 besteht eine innovative Kopplung von Messrobotik und Methoden der Psychophysik und der experimentellen Psychologie. Es werden objektive und subjektive Kriterien gekoppelt, um eine ganzheitliche Evaluation der Produktqualität durchzuführen.

Roboterbasierte Messverfahren sind zum Beispiel der DE 10 2016 106 488 B3 oder der DE 10 2015 102 238 A1 zu entnehmen.

Die DE 10 2014 105 538 A1 bezieht sich auf ein haptisches System und ein Verfahren zum Betreiben eines solchen. Das haptische System beinhaltet einen Endeffektoranschluss und eine Getriebestruktur eines Roboters, um für einen Nutzer die translatorische Verlagerung des Endeffektors wahrzunehmen oder zu erfassen. Dabei sollen am Endeffektoranschluss Kräfte und/oder Momente bestimmt werden.

Die US 2003/0132968 A1 betrifft ein System und Verfahren für virtuelles interaktives Design und Bewertung und Manipulation eines Fahrzeugmechanismus unter Verwendung einer haptischen Benutzerschnittstelle. Das System umfasst ein Computersystem und eine haptische Schnittstelle, die operativ mit dem Computersystem in Verbindung steht, wobei die haptische Schnittstelle eine haptische Endeffektorvorrichtung zur Übertragung von Informationen zwischen einem Benutzer und einem digitalen Modell umfasst, während der Benutzer interaktiv kinematische und dynamische Eigenschaften des Fahrzeugmechanismus unter Verwendung der haptischen Endeffektorvorrichtung erstellt, modifiziert und evaluiert.

Die vorliegende Erfindung setzt sich mit der Problematik auseinander, die zunehmende Komplexität von Produkten sowie die zur Herstellung erforderlichen Entwicklungs-, Produktions- und Evaluationsschritte beherrschbar zu halten. Objektive und subjektive Qualitätskriterien sollen erfassbar sein.

Zur Lösung der Problematik der Erfindung sieht die Erfindung vor, dass ein die beweglichen Glieder aufweisender Arm eines Roboters als die physische Einrichtung bereitgestellt wird, dass bei der Interaktion mit dem virtuellen Objekt die von dem Benutzer auf den Arm des Roboters einwirkenden Kräfte und/oder Momente gemessen und mit für das Bewegen des physischen Objekts charakteristischen Kräften und/oder Momenten zur Qualitätsprüfung des zu bewegenden Objekts verglichen werden, und dass in Abhängigkeit von etwaiger Abweichung zwischen den von dem Benutzer auf die physische Einrichtung einwirkenden Kräften und/oder Momenten und den charakteristischen Kräften und/oder Momenten Veränderungen an dem physischen Objekt oder Eigenschaften von diesem vorgenommen werden.

Erfindungsgemäß werden Virtualität und Realität verknüpft, um mithilfe eines roboterbasierten Messverfahrens haptische Merkmale zu erfassen, ohne dass das zu prüfende Objekt selbst zur Verfügung stehen muss.

Das physische Objekt wird mittels einer Software virtualisiert und die physische Einrichtung wird in räumlicher Position des virtuellen Objektes bereitgestellt.

Soll zum Beispiel der haptische Eindruck beim Schließen einer Tür ermittelt werden, so wird in der Position des virtuellen Türgriffs des virtuellen Objektes die physische Einrichtung positioniert und somit von der Hand der Person erfasst, so dass beim Schließen der virtuellen Tür durch die physische Einrichtung ein Widerstand aufgebaut wird, der von der Person wahrgenommen wird. Gleichzeitig können die von der physischen Einrichtung beim virtuellen Schließen der Tür von der in der physischen Einrichtung integrierten Sensorik ermittelten Daten, wie Kräfte und/oder Momente, erfasst werden, um sodann objektive Kriterien zu ermitteln, die für die Schließung von Türen bei der Produktion zu beachten sind.

Als physische Einrichtung wird ein bewegliche Glieder aufweisender Arm eines Roboters benutzt.

Die Interaktion mit den Fingern oder der Hand der Person bzw. deren Bewegung kann mittels eines Tracking-Systems erfasst werden, wie dies hinlänglich in der Mixed Reality oder Augmented Reality zum Einsatz gelangt.

Um das virtuelle Objekt zu gestalten, werden Funktion und/oder Wirkungsmechanismus des physischen Objektes ermittelt, um die so gewonnenen Werte auf das virtuelle Objekt zu übertragen.

Erfindungsgemäß ist vorgesehen, ein physisches Objekt, auch physischer Prototyp genannt, insbesondere aufbauend auf dem Ansatz des Functional Digital Mock-Up's (FDMU oder FMU genannt), zu virtualisieren. Dabei ist die Kopplung eines virtuellen CAD-basierten Geometriemodells mit einer Verhaltungssimulation vorgesehen. Hierdurch wird in Ergänzung zur Geometrie das funktionale Verhalten des Objektes bzw. Prototyps berücksichtigt.

Das virtuelle Objekt bzw. der virtuelle Prototyp wird sodann hybridisiert durch Kopplung mit einem haptischen Eingabegerät in Form insbesondere eines Messroboters, um einen Menschen multimodal, also sowohl visuell als auch haptisch, interagieren zu lassen.

Im bevorzugten Anwendungsfall wird ein Messroboter verwendet, um ein System, wie eine Fahrzeugtür, hinsichtlich verschiedener qualitativer und quantitativer Qualitätseigenschaften zu testen. Diese können dabei beispielsweise eine Betätigungskraft, die Öffnungsgeschwindigkeit oder auch Dämpfungseigenschaften des Systems Fahrzeugtür betreffen.

Eine Methode zur Perzeptionsqualitätsermittlung mit hybridem Objekt oder Prototypen, also des erzeugten virtuellen Objekts bzw. Prototyps unter Verwendung der physischen Einrichtung, insbesondere eines Messroboters, wird entwickelt, um eine ganzheitliche Evaluation der Produktqualität zu erreichen.

Die erfindungsgemäße Lehre ermöglicht einen Qualitätsprüfungsprozess durch Interaktion zwischen Mensch und hybridem Objekt bzw. Prototypen.

Subjektive Qualitätskriterien sind erzielbar, ohne dass die Notwendigkeit eines Tests mit physischen Prototypen mit objektiven Qualitätskriterien erforderlich ist.

Ein Verfahren zur haptischen Prüfung von einem physischen Objekt mittels einer Prüfeinrichtung durch Interaktion zwischen dem physischen Objekt und der physischen Prüfeinrichtung, das nicht Gegenstand der Erfindung ist, umfasst die Verfahrensschritte
- Analysieren der physischen Prüfeinrichtung und Erzeugen einer virtuellen Prüfeinrichtung von der physischen Prüfeinrichtung,
- Bereitstellen von ersten Daten, die bei einer Interaktion zwischen der virtuellen Prüfeinrichtung und dem virtuellen Objekt ermittelt werden,
- Nutzen der ersten Daten zur Interaktion zwischen der realen Prüfeinrichtung und dem realen Objekt.

Ferner erfolgt ein Analysieren des physischen Objektes und Erzeugen eines virtuellen Objektes von dem physischen Objekt.

Dabei ist insbesondere vorgesehen, dass die Interaktion zwischen der virtuellen Prüfeinrichtung und dem virtuellen Objekt unter Berücksichtigung von bei der Interaktion zwischen der physischen Prüfeinrichtung und dem physischen Objekt ermittelten zweiten Daten erfolgt. Es erfolgt eine Kopplung bzw. Rückkopplung.

Insbesondere ist vorgesehen, dass die physische Prüfeinrichtung ein Roboter mit einem bewegliche Glieder aufweisenden Arm ist und entsprechend die virtuelle Prüfeinrichtung gestaltet ist. Eine mehrachsige Kraft- und Momentensensorik sollte integriert sein bzw. sind integriert.

Nicht zu der Erfindung gehört ein Verfahren zur haptischen Prüfung eines physischen Objektes mittels einer physischen Prüfeinrichtung in Form eines Roboters mit einem bewegliche Glieder aufweisenden Arm durch Interaktion zwischen der physischen Prüfeinrichtung und dem physischen Objekt, umfassend die Verfahrensschritte
- Analysieren der physischen Prüfeinrichtung und Erzeugen einer virtuellen Prüfeinrichtung von der physischen Prüfeinrichtung,
- Bereitstellen eines virtuellen Objektes, das dem physischen Objekt entspricht,
- Bereitstellen von ersten Daten, die bei einer Interaktion zwischen der virtuellen Prüfeinrichtung und dem virtuellen Objekt ermittelt werden,
- Nutzung der ersten Daten zur Interaktion zwischen der physischen Prüfeinrichtung und dem physischen Objekt,
wobei die Interaktion zwischen der virtuellen Prüfeinrichtung und dem virtuellen Objekt in Abhängigkeit von bei der Interaktion zwischen der physischen Prüfeinrichtung und dem physischen Objekt ermittelten zweiten Daten beeinflusst wird, und/oder umgekehrt.

Zwar findet in vielen Bereichen der Produktentwicklung bereits eine zunehmende Virtualisierung statt. Allerdings lassen sich bestehende Ansätze nicht oder nur sehr schwer auf roboterbasierte Qualitätsbeurteilung übertragen, da diese bisher auf prototypische Realaufbauten, die im Zuge der Produktentwicklung aufgebaut werden müssen, angewiesen sind. Hinzu kommt, dass Messverfahren hohe Ansprüche an die Positionsgenauigkeit und Bewegungsverläufe eines Messroboters stellen.

Dabei ist es insbesondere erforderlich, dass bei den bekannten gekoppelten Messverfahren eine genaue und zunächst zu ermittelnde geometrische und funktionale Spezifikation der verwendeten Prototypen zur Verfügung stehen.

Erfindungsgemäß erfolgt demgegenüber eine Virtualisierung einer roboterbasierten Qualitätssicherung, wobei eine frühzeitige virtuelle Evaluation von objektiven und subjektiven Qualitätskriterien, insbesondere für zukünftige Produkte erfolgt.

Da eine Prüfung ausschließlich an virtuellen Objekten erfolgt, um sodann eine Übertragung auf physische Objekte vorzunehmen, ergibt sich der Vorteil, dass auf Grund des Verzichts auf die physischen Prototypen in weniger Entwicklungsschritten schneller und kostengünstiger produziert werden kann. Es können subjektive Evaluationskriterien frühzeitig einbezogen und an die Bedürfnisse der Kunden angepasst werden.

Hierdurch ergibt sich der weitere Vorteil, dass eine gezielte frühzeitige Gestaltung auf die Bedürfnisse der Kunden hinsichtlich der Produktqualität erfolgen kann. Nur die tatsächlich benötigte, perzeptionsorientierte Qualität ist umzusetzen. Dies ermöglicht eine kostengünstige Herstellung im Vergleich zum Stand der Technik.

Die Erfindung sieht verschiedene Anwendungsfälle der Qualitätsprüfung vor. So wird nach einem Lösungsprinzip der Prototyp, also ein physisches Objekt in der für die Qualitätsprüfung erforderlichen Modellgüte virtualisiert. Dieser virtuelle Prototyp wird haptisch erlebbar gestaltet, um auf andere Anwendungsfälle übertragen zu werden. Es erfolgt eine gekoppelte haptische und virtuelle Interaktion mit einer Person.

Es erfolgt eine Visualisierung des physischen Objektes, wie verschwenkbarer Verschluss, wobei eine Kopplung eines virtuellen CAD-basierten Geometriemodells mit einer Verhaltenssimulation erfolgt, also insbesondere aufbauend auf dem Ansatz des Functional Digital Mock-Up's (FDMU oder FMU). Die Daten für die Verhaltenssimulation können aus Konstruktionsvorgaben eines Herstellers kommen. Es wird somit das physische Objekt für die Verhaltenssimulation mit realen Konstruktionsvorgaben ausgestattet, um ein funktionales virtuelles Objekt zu erhalten. Anschließend erfolgt die Hybridisierung des virtuellen Objekts durch Kopplung mit einem haptischen Eingabegerät, wie Roboter. Folglich entsteht ein hybrides Objekt. Das haptische Eingabegerät, wie Roboter, simuliert das Öffnungsverhalten des funktionalen virtuellen Objekts, d.h. z.B. die Vorgabe der Roboterbewegungen, Wege, Winkel etc. Sensorwerte, wie Öffnungskräfte und/oder -momente, kommen aus dem virtuellen Objekt.

Bei der Interaktion einer Person mit dem hybriden Objekt werden die subjektiven Bewertungen der Personen ermittelt, um in Abhängigkeit von der Bewertung neue Daten für weitere Simulationsschritte einzuspielen. Neue Daten können aus realen Prüfungen des physischen Objektes, wie Türprüfungen, abgeleitet werden. Infolgedessen kann die haptische Interaktion optimiert werden.

Nach einem weiteren selbstständigen Lösungsvorschlag wird ein Prüfstand vollständig virtualisiert, der den für die Qualitätsprüfung erforderlichen Messroboter aufweist. Dabei wird der virtuelle Prüfstand mit dem physischen Prüfstand gekoppelt, um auf Basis relevanter Zustandsinformationen virtuelle Simulationen durchzuführen. Es erfolgen an virtuellen und physischen Prototypen Qualitätsprüfungen, wobei eine Kopplung zwischen dem virtuellen und physischen Prüfstand erfolgt. Als Ergebnis erhält man eine hybride Qualitätsprüfung.

Beim virtuellen Prüfstand wird die Prüfeinrichtung, insbesondere in Form eines Roboters, virtualisiert, und mit dem funktionalen, virtuellen Objekt gekoppelt. Es entsteht ein funktionales, virtuelles Prüfsystem. Eine Methode zur virtuellen Qualitätsprüfung entsteht, wobei das komplette funktionelle Verhalten vom physischen Objekt, wie Tür, und physischer Prüfeinrichtung, wie Roboter, simuliert wird, um mögliche Testszenarien vor dem realen Aufbau prüfen zu können. Z.B. die Erreichbarkeit von Testpunkten, Messgeschwindigkeiten, Platzbedarf, Eliminierung von Störgrößen, Messungen von Betätigungskräften und -momenten können ermittelt werden.

Sind die simulierten Messungen bzw. Tests erfolgreich, werden die simulierten Abläufe in ein reales System übertragen, so dass die Programmierung des realen Prüfablaufs erfolgen kann.

Mit dem erfindungsgemäßen Verfahren können reale Systeme an globalen Standorten über z.B. die Cloud programmiert werden. Hierdurch ergeben sich enorme Zeitersparnisse für den Anwender und ein sicherer Nachweis für die Richtigkeit der Messungen, z.B. definierte Messpunkte etc.

Die hybride Qualitätsprüfung stellt eine Prüfmethode zur Verfügung, die
- die Planung des Qualitätsprüfversuchs mit Hilfe des virtuellen Prüfstands beschreibt,
- die Durchführung einer hybriden Qualitätsprüfung mit Hilfe des gekoppelten Prüfstandes zur Optimierung der Positionsgenauigkeit und Bewegungsverläufe des physischen Messroboters beschreibt,
- die Kopplung der mit dem hybriden Prototyp ermittelten subjektiven Messdaten mit denen im gekoppelten Prüfstand ermittelten objektiven Messdaten zu einer Perzeptions-Qualität des Prototyps beschreibt.

Erfindungsgemäß erfolgt eine Virtualisierung einer insbesondere Roboter-basierten Qualitätsprüfung mit dem Ziel, durch frühzeitige virtuelle Evaluation von objektiven und subjektiven Qualitätskriterien zukünftige Produkte
- durch den Verzicht auf physische Prototypen in weniger Entwicklungsschritten schneller und kostengünstiger herstellen zu können,
- durch früheren Einbezug subjektiver Evaluationskriterien besser an die Bedürfnisse des Kunden anpassen zu können und
- durch die gezielte frühzeitige Gestaltung auf die Bedürfnisse des Kunden hinsichtlich ihrer Produktqualität so steuern zu können, dass nur die tatsächlich benötigte, perzeptionsorientierte Qualität umgesetzt und so eine kostengünstigere Herstellung ermöglicht wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von bevorzugten Ausführungsbeispielen.

Es zeigen:
- Fig. 1: eine Prinzipdarstellung eines ersten Prüfsystems und
- Fig. 2: eine Prinzipdarstellung eines zweiten Prüfsystems, das nicht zur Erfindung gehört.

Die Erfindung wird nachstehend anhand eines industrierelevanten Anwendungsfalls in Form einer Türprüfsimulation erläutert. Bei diesem Anwendungsfall wird ein Messroboter verwendet, um eine Fahrzeugtür hinsichtlich verschiedener qualitativer und quantitativer Qualitätseigenschaften zu testen. Diese können dabei beispielsweise die Betätigungskraft, die Öffnungsgeschwindigkeit oder auch Dämpfungseigenschaften des Systems Fahrzeugtür betreffen.

Mit anderen Worten ist im Ausführungsbeispiel die Fahrzeugtür ein Objekt, das physisch zur Verfügung gestellt und virtuell nachempfunden wird.

Es wird ein virtuelles Prüfrobotersystem zur Simulation und zur subjektivbasierten Produktabsicherung in immersiven Entwicklungsumgebungen beschrieben.

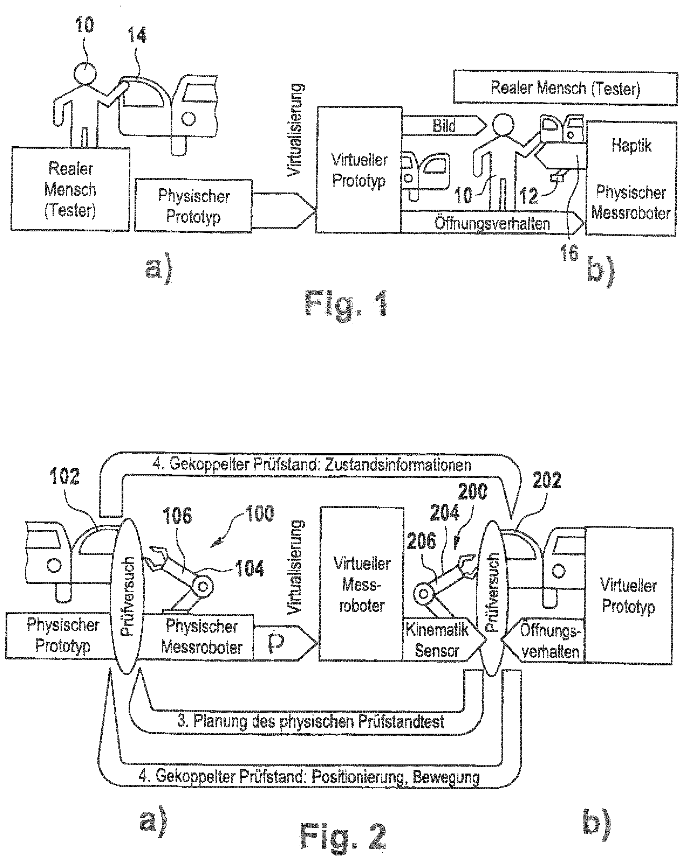

Anhand der Fig. 1 soll erläutert werden, wie eine Person 10 haptische Merkmale an einer Fahrzeugtür 12 wahrnimmt, ohne die reale, also physische Fahrzeugtür 14 selbst erfassen zu müssen.

Hierzu ist gemäß Fig. 1a vorgesehen, dass zunächst eine Analyse des physischen Objektes 14 oder Prototypen "Fahrzeugtür" hinsichtlich Funktion und dahinterstehender physikalischer Wirkmechanismen erfolgt. Auf Grund dieser Daten erfolgt eine Virtualisierung der Fahrzeugtür 14. Dabei kann unter Zugrundelegung von in Bibliotheken abgespeicherten Daten zusätzlich eine Optimierung der virtuellen Fahrzeugtür 12 in Bezug auf seine Funktion erzielt werden.

Insbesondere ist vorgesehen, das auch als physischen Prototyp bezeichnete physische Objekt aufbauend, insbesondere auf dem Ansatz des Functional Digital Mock-Up's (FDMU oder FMU), zu virtualisieren. Dieser sieht die Kopplung eines virtuellen CAD-basierten Geometriemodells mit einer Verhaltenssimulation vor. Es kann eine Softwarekombination aus Dymola zur Verhaltensmodellierung und Unity3D zur Geometriedarstellung zum Aufbau des spezifischen virtuellen Prototyps benutzt werden. Es erfolgt sodann eine Hybridisierung des virtuellen Prototyps durch Kopplung mit einem haptischen Eingabegerät aufbauend, insbesondere auf dem Ansatz des Smart Hybrid Prototyping (SHP). In dem Messroboter war eine mehrachsige Kraft- und Momentensensorik integriert.

Gemäß Fig. 1b wird die Tür 12 virtuell z.B. in einem Head-Mounted-Display dargestellt, das von einer Person genutzt wird. Zusätzlich wird der Messroboter 16 benutzt, der in räumlicher Position der virtuellen Fahrzeugtür 12 bereitgestellt wird. Der Roboter 16 ist mit einem bewegliche Glieder aufweisenden Arm versehen, in dem die Kraft- oder Momente-Sensoren integriert sind, um die auf den Roboter 16 einwirkenden Kräfte bzw. Momente erfassen zu können, über die wiederum Rückschlüsse über Betätigungskräfte, Öffnungsgeschwindigkeiten oder Dämpfungseigenschaften der virtuellen Tür 12 gewonnen werden können.

Erfasst die Person 10, also der reale Mensch z.B. den virtuellen Handgriff der Tür 12 - die Bewegung der Person bzw. der Hand werden durch Markierungen an der Hand mittels z.B. Kameras erfasst, also z.B. durch ein optisches Trackingsystem -, so befindet sich in dieser Position ein Abschnitt des Roboterarms oder ein von diesem ausgehendes Element, so dass beim virtuellen Schließen oder Öffnen der Tür 12 der Arm bzw. das Element mitbewegt wird mit der Folge, dass die einwirkenden Kräfte/Momente erfassbar sind. Somit gewinnt die Person 10 einen haptischen Eindruck von der Schließ- bzw. Öffnungsbewegung der Tür 12 mit der Folge, dass Parameter auf Grund der von dem Roboter 16 ermittelten Daten erfassbar sind, die für den Schließ- bzw. Öffnungsvorgang einer Fahrzeugtür unter Berücksichtigung subjektiver Eindrücke der Person 10 relevant sind.

Erfindungsgemäß erfolgt ein virtuelles Prototyping des physischen Objektes, wobei Eigenschaften des physischen Objektes auf das virtuelle Objekt abgebildet sind. Mittels einer realen Messeinrichtung, insbesondere eines Roboters werden sodann virtuelle Bewegungen des virtuellen Objekts erfasst, um Daten zu erhalten, die bei der Konstruktion des dem virtuellen Objekt zugrundeliegenden physischen Objekts berücksichtigt werden können.

Ist beim Ausführungsbeispiel der Fig. 1 eine reale Person erforderlich, um Qualitätsparameter zu ermitteln, so zielt das Ausführungsbeispiel der Fig. 2, das eine eigenständige Erfindung widerspiegelt, auf die Möglichkeit ab, virtuell Kenngrößen bzw. Parameter zu ermitteln, die auf physischen Objekten abgebildet werden, ohne dass eine reale Person erforderlich ist.

Dabei wird erfindungsgemäß ein physischer Prüfstand virtualisiert. Der physische Prüfstand umfasst einen Messroboter, Prüfstandstechnik wie Messtechnik, und Prototypenumgebung wie Teilfahrzeug. Dieser Ansatz baut auf den Ansätzen der Robotersimulation auf und koppelt diese mit den Ansätzen des Functional Digital Mock-Up's (FDMU oder FMU). Es folgt sodann eine Kopplung des virtuellen Prüfstandes und des virtuellen Prototyps, wie dies zuvor erläutert worden ist, zum virtuellen Prüfsystem. Eine Qualitätsprüfung verschiedener Qualitätsmerkmale mit dem virtuellen Prüfsystem erfolgt sodann.

Insbesondere zeichnet sich die Erfindung dadurch aus, dass neben der Nutzung etablierter Ansätze der Robotermodellierung und -simulation Modelle zur Einbindung der Roboterregelung, insbesondere der mehrachsigen Kraft- und Momentensensorik benutzt werden. Dies ermöglicht die Virtualisierung des Messroboters sowie der Prüfstandtechnik. Die zuvor erläuterte Virtualisierung des physischen Prototypens wird zu einem virtuellen Prüfsystem erweitert, um ein Werkzeug für die einfache Virtualisierung der physischen Prüfstandelemente bereitzustellen. Ein Verfahren zur virtuellen Qualitätsprüfung wird durch das mit diesem Werkzeug erstellte virtuelle Prüfsystem ermöglicht.

In der linken Darstellung der Fig. 2 ist rein schemenhaft ein Prüfstand 100 dargestellt, in dem die Funktion einer Fahrzeugtür 102 als physisches Objekt erfasst werden soll. Der Prüfstand 100 weist einen Prüfroboter 104 auf, der gleichfalls einen bewegliche Glieder aufweisenden Arm 106 mit Kraft- und Momentensensoren besitzt, der mit der Kraftfahrzeugtür 102 als physisches Objekt oder physischer Prototyp wechselwirkt, um diese zu schließen bzw. zu öffnen. In dem Prüfstand 100 kann sich weiteres Equipment (Prüfstandtechnik) befinden, ohne dass auf dieses näher eingegangen wird.

Es erfolgt eine Analyse des Messroboters 100 sowie Prüfstandequipments in Bezug auf Funktionen und dahinterstehender physikalischer Wirkmechanismen. Auf der Basis dieser Daten erfolgt eine Virtualisierung des Messroboters 100 und des Prüfstandequipments. Es wird sodann in einem virtuellen Prüfstand 200 ein virtuelles Objekt 202 - im Ausführungsbeispiel eine Fahrzeugtür - implementiert. Der virtuelle Prüfstand 200 umfasst - dem physischen Prüfstand 100 nachempfunden - einen virtuellen Messroboter 204 mit einem bewegliche Glieder aufweisenden Arm 206. Auch sind virtuell Kräfte- und Momente-Sensoren integriert.

Bei der Virtualisierung des Prüfstandes werden insbesondere die Ansätze des Smart Hybrid Prototyping (SHP) und des Functional Digital Mock-Up's (FDMU oder FMU) benutzt.

Insbesondere wird eine Softwarekombination aus Dymola (zur Verhaltensmodellierung) und Unity3D (zur Geometriedarstellung) zum Aufbau des virtuellen Prototyps eingesetzt. Der virtuelle Prototyp kann sodann mit der Realität abgeglichen, verfeinert und verifiziert werden. Entsprechend zuvor erfolgter Erläuterungen kann somit die Planung des physischen Prüfstandtests erfolgen, d.h., die Ergebnisse aus dem virtuellen Prüfsystem können zur Planung und Optimierung des physischen Prüfsystems verwendet werden.

Sodann erfolgt eine virtuelle Qualitätsprüfungsplanung zur Durchführung von Prüfstandsversuchen mit Hilfe des virtuellen Prüfstandes 200.

Die Prüfungen an dem physischen Objekt 102 werden sodann auf der Basis der in dem virtuellen Prüfstand 200 gewonnenen Daten übertragen. Dabei befindet sich im physischen Prüfstand 100 gleichfalls das zu prüfende Objekt, im Ausführungsbeispiel also die Fahrzeugtür 102.

Es erfolgt sodann eine Analyse der im physischen Prüfstand 100 auftretenden Abweichungen und Probleme hinsichtlich Positionsgenauigkeit und Bewegungsverläufen des Messroboters 104 bei der Interaktion mit dem physischen Prototypen 102. Die Abweichungen und Probleme werden mittels eines Optimierungs- und Fehlerbehebungsalgorithmus in den virtuellen Prüfstand 200 implementiert, um die Abweichungen und Probleme zu lösen. Dabei erfolgt eine Kopplung der Sensorik des physischen Prüfstands 100 mit dem virtuellen Prüfstand 200, so dass Zustandsinformationen in dem virtuellen Prüfstand 200 eingespielt werden können. Umgekehrt ist eine Kopplung zwischen dem virtuellen Prüfstand 200 und dem physischen Prüfstand 100 gegeben, um die erarbeiteten Optimierungen und Fehlerbehebungen in den physischen Prüfstand 100 einzuspielen.

Dabei können ergänzend Tests durchgeführt werden, um gezielt Positionsungenauigkeit oder fehlerhafte Bewegungsverläufe in dem physischen Prüfstand 100 auszulösen.

Es folgt eine Rückkopplung zwischen dem physischen und virtuellen Prüfstand 100, 200, um eine Optimierung zu erzielen. Eine virtuelle Qualitätsprüfung wird in eine reale implementiert.

In Weiterbildung erfolgt eine Kopplung des physischen Prüfstands mit dem virtuellen Prüfstand, um den virtuellen Prüfstand durch Zustandsinformationen des physischen Prüfstands zu befähigen, Abweichungen in diesem zu erkennen, durch Simulation Korrekturen abzuleiten und diese in den physischen Prüfstand zurückspielen zu können. Dieser Lösungsansatz ist in Fig. 2 mit dem Pfeil P (Planung des physischen Prüfstandtest) gekennzeichnet.

Aufgrund der Lehre ergeben sich Möglichkeiten, Entwicklungszeiten zu reduzieren sowie die zunehmende Komplexität im Bereich der Entwicklung individualisierter Produkte mit teilweise abstrakten Qualitätskriterien beherrschbar zu erhalten. Die Möglichkeit, Prototypen zu virtualisieren und mittels eines physischen Messroboters haptisch erlebbar zu machen, erlaubt zukünftig den Aufbau realer Prototypenaufbauten deutlich zu produzieren oder sogar ganz darauf zu verzichten. Der Messroboter wird aufgrund der Virtualisierung von Prototypen in die Lage versetzt, beliebige prototypische Systeme haptisch zu simulieren. Die Möglichkeit eines komplett virtuellen Prüfsystems stellt ein neues Softwarewerkzeug zur Verfügung, mit dem die haptischen Eindrücke von menschlichen Testpersonen vollständig im virtuellen Raum vorhergesagt werden können, ohne auf Hardwarekomponenten zwingend zurückgreifen zu müssen. Dies stellt insbesondere für Anbieter komplexer Systeme mit langen Zulieferketten und einer hohen Komponentenvielfalt, wie diese in der Automobilindustrie vorherrscht, ein Werkzeug dar, mit dem Entwicklungszeiten und -aufwände reduziert und der gesamte Entwicklungs- und Fertigungsprozess flexibilisiert werden kann.

## Patentansprüche

1. Verfahren zur Erfassung haptischer Merkmale eines zu bewegenden physischen Objektes (14), wie verschwenkbaren Verschlusses, umfassend die Verfahrensschritte
- Virtualisierung des physischen Objektes (14) zur Erzeugung eines virtuellen Objekts (12),
- Interaktion einer Person (10) mit dem virtuellen Objekt (12), wobei die Interaktion mittels einer physischen Einrichtung (16) erfolgt,
- Erzeugen einer haptischen Reaktion bei der Interaktion zwischen der Person (10) und dem virtuellen Objekt (12) unter Verwendung der physischen Einrichtung (16), die entsprechend der durch die Interaktion erfolgenden Bewegung des virtuellen Objektes (12) physisch von der Person (10) bewegt wird,
- wobei die physische Einrichtung (16) bewegliche Glieder aufweist und mit integrierten Kraft- und/oder Momenten-Sensoren in räumlicher Position des virtuellen Objektes bereitgestellt wird,
- und wobei auf die physische Einrichtung einwirkenden Kräfte und/oder Momente ermittelt werden,
**dadurch gekennzeichnet,**
**dass** ein die beweglichen Glieder aufweisender Arm eines Roboters als die physische Einrichtung (16) bereitgestellt wird, dass bei der Interaktion mit dem virtuellen Objekt (12) die von dem Benutzer (10) auf den Arm des Roboters einwirkenden Kräfte und/oder Momente gemessen und mit für das Bewegen des physischen Objekts (14) charakteristischen Kräften und/oder Momenten zur Qualitätsprüfung des zu bewegenden Objekts verglichen werden, und dass in Abhängigkeit von etwaiger Abweichung zwischen den von dem Benutzer (10) auf die physische Einrichtung (16) einwirkenden Kräften und/oder Momenten und den charakteristischen Kräften und/oder Momenten Veränderungen an dem physischen Objekt oder Eigenschaften von diesem vorgenommen werden.

2. Verfahren nach Anspruch 1,
**dadurch gekennzeichnet,**
**dass** die Interaktion zwischen dem virtuellen Objekt (12) und der Person (10) mit deren Fingern und/oder der Hand erfolgt, deren Bewegung mittels eines Tracking-Systems erfasst wird.

3. Verfahren nach Anspruch 1 oder 2,
**dadurch gekennzeichnet,**
**dass** bei Abweichungen eine Rückkopplung auf dem physischen Objekt zugeordnete Eigenschaften in Form von Öffnungsgeschwindigkeit oder Dämpfung erfolgt und diese beeinflusst wie verändert werden.

4. Verfahren nach zumindest einem der vorhergehenden Ansprüche,
**dadurch gekennzeichnet,**
**dass** zumindest eine Funktion und/oder ein Wirkmechanismus des physischen Objektes (14) ermittelt und entsprechend das virtuelle Objekt (12) gestaltet wird.

## Claims

1. A method for capturing haptic features of a physical object (14) to be moved, for example a pivotable closure, comprising the following method steps:
- virtualising the physical object (14) to generate a virtual object (12),
- producing interaction between a person (10) and the virtual object (12), the interaction taking place by means of a physical device (16),
- generating a haptic reaction during the interaction between the person (10) and the virtual object (12) using the physical device (16), which is physically moved by the person (10) in accordance with the movement of the virtual object (12) that takes place as a result of the interaction,
- the physical device (16) having movable links and being provided having integrated force and/or torque sensors in the spatial position of the virtual object,
- and forces and/or torques that act on the physical device being detected,
**characterised in that**
an arm of a robot, said arm having the movable links, is provided as the physical device (16), **in that**, during the interaction with the virtual object (12), the forces and/or torques exerted on the robot arm by the user (10) are measured and compared with forces and/or torques that are characteristic of the movement of the physical object (14) for the purpose of quality control of the object to be moved, and **in that** changes to the physical object or to properties thereof are implemented on the basis of any deviation between the forces and/or torques exerted on the physical device (16) by the user (10) and the characteristic forces and/or torques.

2. The method according to claim 1,
**characterised in that**
the interaction between the virtual object (12) and the person (10) takes place using the fingers and/or hand of the person, the movement of which is captured by means of a tracking system.

3. The method according to claim 1 or claim 2,
**characterised in that**
in the event of deviations, feedback occurs in relation to properties associated with the physical object in the form of opening speed or damping, and these properties are influenced, for example changed.

4. The method according to at least one of the preceding claims,
**characterised in that**
at least one function and/or an active mechanism of the physical object (14) is/are detected and the virtual object (12) is structured accordingly.

## Revendications

1. Procédé d'acquisition des caractéristiques haptiques d'un objet physique à actionner (14), tel que dispositif de fermeture basculable, comprenant les étapes de procédé suivantes :
- Virtualisation de l'objet physique (14) pour créer un objet virtuel (12),
- Interaction d'une personne (10) avec l'objet virtuel (12), sachant que l'interaction a lieu au moyen d'un dispositif physique (16),
- Création d'une réaction haptique lors de l'interaction entre la personne (10) et l'objet virtuel (12) en utilisant le dispositif physique (16) qui est actionné physiquement par la personne (10), selon le mouvement de l'objet virtuel (12) découlant de l'interaction,
- sachant que le dispositif physique (16) présente des éléments mobiles et est fourni avec des capteurs de force et/ou de moment intégrés dans la position spatiale de l'objet virtuel,
- et sachant que les forces et/ou moments s'exerçant sur le dispositif physique sont déterminés,
**caractérisé en ce**
**qu'**un bras d'un robot, présentant les éléments mobiles est fourni comme dispositif physique (16), que lors de l'interaction avec l'objet virtuel (12), les forces et/ou moments exercés par l'utilisateur (10) sur le bras du robot sont mesurés et comparés aux forces et/ou moments caractéristiques du mouvement de l'objet physique (14) pour le contrôle de qualité de l'objet à actionner, et que selon l'éventuel écart entre les forces et/ou moments exercés par l'utilisateur (10) sur le dispositif physique (16) et les forces et/ou moments caractéristiques, des modifications sur l'objet physique ou les caractéristiques de celui-ci sont effectuées par l'utilisateur.

2. Procédé selon la revendication 1,
**caractérisé en ce**
**que** l'interaction entre l'objet virtuel (12) et la personne (10) a lieu à l'aide de ses doigts et/ou de la main dont le mouvement est acquis au moyen d'un système de traçabilité.

3. Procédé selon la revendication 1 ou 2,
**caractérisé en ce**
**qu'**en cas d'écarts, un rétrocouplage a lieu concernant des caractéristiques attribuées à l'objet physique, telles que vitesse d'ouverture ou amortissement, et que ces caractéristiques sont influencées ou modifiées.

4. Procédé selon au moins l'une des revendications précédentes,
**caractérisé en ce**
**qu'**au moins une fonction et/ou un mécanisme d'action de l'objet physique (14) sont déterminés et que l'objet virtuel (12) est configuré en conséquence.
